# EUROPÄISCHE PATENTSCHRIFT

(11) **EP 0 424 657 B1**
(45) Veröffentlichungstag und Bekanntmachung des Hinweises auf die Patenterteilung: **17.03.1999**
(21) Anmeldenummer: 90117601.6
(22) Anmeldetag: 12.09.1990
(51) Int. Cl.: G06F 9/445, G06F 15/16

(54) **Elektronische Einrichtung mit einer Mehrzahl von Mikroprozessoranordnungen**
Electronic apparatus with a plurality of microprocessor systems
Dispostif électronique avec plusieurs systèmes de microprocesseurs

(30) Priorität: 29.09.1989 DE 3932680
(43) Veröffentlichungstag der Anmeldung: 02.05.1991
(73) Patentinhaber: SIEMENS AKTIENGESELLSCHAFT, 80333 München (DE)
(72) Erfinder: Harbrink, Helmut, Dipl.-Ing., D-8000 München 71 (DE)

(56) Entgegenhaltungen:
- EP-A- 0 077 404
- EP-A- 0 270 680
- EP-A- 0 338 290
- DE-A- 3 411 105
- US-A- 4 428 046
- RADIO FERNSEHEN ELEKTRONIK. Bd. 33, Nr. 12, Dezember 1984, BERLIN DD Seiten 773 - 776; W. MATTHES: 'Multimikrorechnersysteme 9'

## Beschreibung

Die Erfindung betrifft eine elektronische Einrichtung, insbesondere Datenübertragungseinrichtung, mit einer Mehrzahl von Mikroprozessoranordnungen, welchen jeweils ein gesonderter Steuerbefehlsspeicher für die Speicherung einer Betriebs-Steuerbefehlsfolge zugeordnet ist. Eine solche Einrichtung ist aus DE-A-3,411,105 bekannt.

In derartigen elektronisichen Einrichtungen sind als Steuerbefehlsspeicher im allgemeinen Festwertspeicher vorgesehen. Bei diesen kann es sich um in den Mikroprozessoren intern vorhandene oder um externe Festwertspeicher handeln, die an die Mikroprozessoren über externe Schnittstellen angeschlossen sind. Externe Festwertspeicher sind dabei üblicherweise auf Steckfassungen montiert, um bei erforderlichen Änderungen in den Betriebs-Steuerbefehlsfolgen durch Austauschen der Festwertspeicher den Änderungsaufwand in der betreffenden elektronischen Einrichtung möglichst gering zu halten. Dennoch ist bei einem solchen Austausch von Festwertspeichern insbesondere bei elektronischen Einrichtungen mit einer Vielzahl von Mikroprozessoranordnungen ein erheblicher Montageaufwand und damit Kostenaufwand verbunden.

Es ist nun Aufgabe der vorliegenden Erfindung, einen Weg zu zeigen, wie bei einer elektronischen Einrichtung der eingangs genannten Art die den einzelnen Mikroprozessoranordnungen zugeordneten Steuerbefehlsspeicher ausgebildet werden können, um bei erforderlichen Änderungen den Änderungsaufwand in der betreffenden elektronischen Einrichtung gering zu halten.

Gelöst wird die vorstehend aufgezeigte Aufgabe bei einer elektronischen Einrichtung der eingangs genannten Art durch die im kennzeichnenden Teil des Patentanspruchs 1 angegebenen Merkmale.

Die Erfindung bringt den Vorteil mit sich, daß bei erforderlichen Änderungen in Betriebs-Steuerbefehlsfolgen unabhängig von der Anzahl der von diesen Änderungen betroffenen Mikroprozessoranordnungen stets lediglich ein die Betriebs-Steuerbefehlsfolgen sämtlicher Mikroprozessoranordnungen enthaltender Festwertspeicher ausgetauscht werden muß und daß nach einem solchen Austausch in einfacher Weise unter der Steuer der mit dem Festwertspeicher verbundenen Mikroprozessoranordnung die einzelnen Betriebs-Steuerbefehlsfolgen in mit den übrigen Mikroprozessoranordnungen verbundene Schreib-Lese-Speicher geladen werden können. Eine zweckmäßige Ausgestaltung der Erfindung ergibt sich aus dem Patentanspruch 2. Der Vorteil dieser Ausgestaltung besteht darin, daß in der mit dem gemeinsamen Festwertspeicher verbundenen Mikroprozessoranordnung in einfacher Weise das ordnungsgemäße Laden der einzelnen Betriebs-Steuerbefehlsfolgen in die mit den übrigen Mikroprozessoranordnungen verbundenen Schreib-Lese-Speicher überprüft werden kann.

Im folgenden wird nun die Erfindung anhand einer Zeichnung beispielsweise näher erläutert.

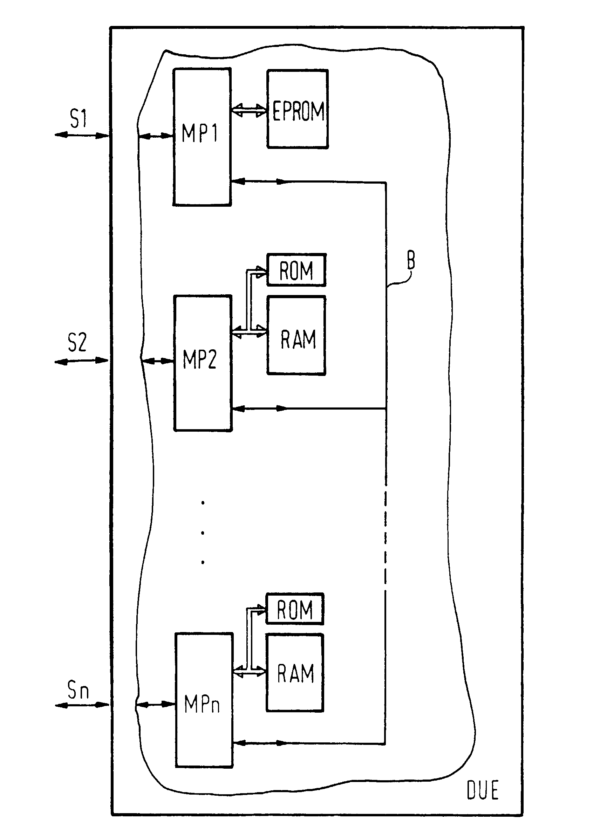

In der Zeichnung ist ausschnittweise ein Blockschaltbild einer elektronischen Einrichtung DUE dargestellt. Bei dieser möge es sich beispielsweise um eine Datenübertragungseinrichtung in Form einer Multiplexanordnungen handeln, an welche Teilnehmereinrichtungen über eine Mehrzahl von Schnittstellenleitungen S1 bis Sn anschließbar sind, wobei von diesen lediglich die Schnittstellenleitungen S1, S2 und Sn angegeben sind. Jeder der Schnittstellenleitungen ist eine gesonderte Mikroprozessoranordnung zugeordnet. Die Mikroprozessoranordnungen sind in der Zeichnung entsprechend ihrer Zuordnung zu den Schnittstellenleitung mit MP1, MP2 und MPn bezeichnet.

Bei den Mikroprozessoranordnungen möge es sich beispielsweise um Ein-Chip-Mikroprozessoren handeln, welche jeweils über interne Schreib-Lese-Speicher als Arbeitsspeicher sowie über externe in der Zeichnung mit EPROM, ROM bzw. RAM bezeichnete Steuerbefehlsspeicher verfügen. Letztere sind in bekannter Weise über Busleitungssysteme mit den Mikroprozessoranordnungen verbunden. Die Mikroprozessoranordnungen stehen außerdem untereinander über einen Bus B in Verbindung. Je nach der Ausbildung der Mikroprozessoranordnungen kann es sich dabei um einen seriellen oder einen aus einer Mehrzahl von Einzelleitungen gebildeten parallelen Bus handeln.

Der mit der Mikroprozessoranordnung MP1 verbundene Steuerbefehlsspeicher EPROM ist als Festwertspeicher, beispielsweise als elektronisch löschbarer Festwertspeicher, ausgebildet. In diesem sind dabei einerseits BetriebsBetriebs-Steuerbefehlsfolgen für den Betrieb sämtlicher Mikroprozessoranordnungen der dargestellten elektronischen Einrichtung und andererseits eine Übertragungs-Steuerbefehlsfolge gespeichert. Mit Hilfe dieser Übertragungs-Steuerbefehlsfolge sind die einzelnen Betriebs-Steuerbefehlsfolgen über den Bus übertragbar.

Der den übrigen Mikroprozessoranordnungen jeweils zugehörige Steuerbefehlsspeicher ist aus einem Festwertspeicher ROM mit geringer Speicherkapazität sowie aus einem Schreib-Lese-Speicher RAM gebildet. In dem Festwertspeicher ROM ist dabei eine Lade-Steuerbefehlsfolge für das Laden einer Betriebs-Steuerbefehlsfolge in den zugehörigen Schreib-Lese-Speicher RAM gespeichert.

Bezüglich des Festwertspeicher EPROM sei noch darauf hingewiesen, daß dieser auswechselbar auf eine Steckfassung aufgesteckt ist. Dadurch kann dieser beispielsweise bei erforderlichen Änderungen in gespeicherten BetriebsBetriebs-Steuerbefehlsfolgen in einfacher Weise ausgetauscht werden.

Die in dem Festwertspeicher EPROM gespeicherte Übertragungs-Steuerbefehlsfolge wird mit dem Anlegen einer Betriebsspannung an die elektronische Einrichtung aktiviert. Alternativ kann eine solche Aktivierung aber auch beispielsweise durch eine manuelle Betätigung eines in der elektronischen Einrichtung vorhandenen Schaltelementes beispielsweise in Form einer Taste oder eines Schalters erfolgen. Unabhängig von der Art der Aktivierung der Übertragungs-Steuerbefehlsfolge gibt die zugehörige Mikroprozessoranordnung MP1 nacheinander im Zuge eines Steuerzyklus Steuersignale, durch die die übrigen Mikroprozessoranordnungen adressiert werden, über den Bus ab. Mit dem Auftreten eines solchen Steuersignals auf dem Bus, aktiviert die dadurch adressierte Mikroprozessoranordnung die in dem zugehörigen Festwertspeicher ROM gespeicherte Lade-Steuerbefehlsfolge. Im Anschluß daran beginnt die Mikroprozessoranordnung MP1 im Zuge des Ablaufs der Übertragungs-Steuerbefehlsfolge mit der sequenziellen Übertragung der für die gerade adressierte Mikroprozessoranordnung in dem Festwertspeicher EPROM gespeicherten Betriebs-Steuerbefehlsfolge. Die in Frage kommende Mikroprozessoranordnung übernimmt dann diese Betriebs-Steuerbefehlsfolge über den Bus und überträgt die einzelnen Betriebs-Steuerbefehle im Zuge des Ablaufs der Lade-Steuerbefehlsfolge in festgelegte Speicherzellen des zugehörigen Schreib-Lese-Speichers RAM. Diese gerade erläuterten Verfahrensschritte laufen nacheinander auch in allen übrigen Mikroprozessoranordnungen ab, bis die in dem Festwertspeicher EPROM gespeicherten Betriebs-Steuerbefehlsfolgen in die mit den einzelnen Mikroprozessoranordnungen verbundenen Schreib-Lese-Speicher RAM geladen sind.

Die gerade erläuterten Ladevorgänge können auch so modifiziert sein, daß mit dem sequenziellen Speichern der einzelnen Betriebs-Steuerbefehle in einem Schreib-Lese-Speicher RAM sofort eine Kopie des jeweiligen Betriebs-Steuerbefehls über den Bus zu der Mikroprozessoranordnung MP1 hin übertragen wird. In dieser erfolgt dann ein Vergleich des jeweils empfangenen Betriebs-Steuerbefehls mit dem zuvor übertragenen, beispielsweise in einem Register der Mikroprozessoranordnung MP1 noch zur Verfügung stehenden Betriebs-Steuerbefehls. Auf diese Weise kann in der Mikroprozessoranordnung MP1 für jeden der übertragenen Betriebs-Steuerbefehle die fehlerfreie Übertragung und Speicherung überprüft werden.

Abschließend sei noch darauf hingewiesen, daß zwar bei dem vorstehend erläuterten Ausführungsbeispiel die Übertragungs-Steuerbefehlsfolge sowie die Lade-Steuerbefehlsfolgen jeweils in einem externen Festwertspeicher EPROM bzw. ROM gespeichert sind. Diese Steuerbefehlsfolgen können jedoch auch in internen Festwertspeichern der Mikroprozessoranordnungen gespeichert sein. Darüber hinaus können auch anstelle der oben erwähnten Ein-Chip-Mikroprozessoren anderweitig ausgebildete Mikroprozessoranordnungen benutzt sein. Außerdem kann für die zuvor erläuterten Ladevorgänge auch ein ohnehin für Steuervorgänge während des Betriebs der elektronischen Einrichtung zwischen den einzelnen Mikroprozessoranordnungen vorgesehener Bus ausgenutzt werden.

## Patentansprüche

1. Elektronische Einrichtung, insbesondere Datenübertragungseinrichtung, mit einer Mehrzahl von Mikroprozessoranordnungen (MP1, ...,MPn), welchen jeweils ein gesonderter Steuerbefehlsspeicher (EPROM, RAM) für die Speicherung einer Betriebs-Steuerbefehlsfolge zugeordnet ist,
**dadurch gekennzeichnet,**
daß die einzelnen Mikroprozessoranordnungen über einen Bus (B) miteinander verbunden sind,
daß der Steuerbefehlsspeicher einer der Mikroprozessoranordnungen als gemeinsamer Festwertspeicher (EPROM) für die Speicherung der BetriebsBetriebs-Steuerbefehlsfolgen sämtlicher Mikroprozessoranordnungen sowie einer Übertragungs-Steuerbefehlsfolge ausgebildet ist, daß die Steuerbefehlsspeicher der übrigen Mikroprozessoranordnungen (MP2,...,MPn) jeweils aus einem Festwertspeicher geringer Kapazität (ROM) für die Speicherung einer Lade-Steuerbefehlsfolge sowie aus einem Schreib-Lese-Speicher (RAM) für die Speicherung der für die jeweilige Mikroprozessoranordnung vorgesehenen Betriebs-Steuerbefehlsfolge gebildet sind
und daß durch Ablauf der Übertragungs-Steuerbefehlsfolge in der mit dem gemeinsamen Festwertspeicher (EPROM) verbundenen Mikroprozessoranordnung (MP1) von dieser her durch Abgabe von Steuersignalen über den Bus die Lade-Steuerbefehlsfolgen der übrigen Mikroprozessoranordnungen (MP2, ..., MPn) nacheinander aktiviert werden und dabei auf eine solche Aktivierung hin die für die jeweilige Mikroprozessoranordnung in dem gemeinsamen Festwertspeicher gespeicherte Betriebs-Steuerbefehlsfolge in den in Frage kommenden Schreib-Lese-Speicher (RAM) geladen wird.

2. Elektronische Einrichtung nach Anspruch 1,
**dadurch gekennzeichnet,**
daß auf jede Aufnahme eines Betriebs-Steuerbefehls in einen der Schreib-Lese-Speicher (RAM) im Zuge des Ablaufs der jeweiligen Lade-Steuerbefehlsfolge eine Kopie des gerade aufgenommenen Betriebs-Steuerbefehls über den Bus zu der mit dem gemeinsamen Festwertspeicher verbundenen Mikroprozessoranordnung hin übertragen und in dieser mit dem zuvor gerade abgegebenen Betriebs-Steuerbefehl verglichen wird.

## Claims

1. Electronic device, in particular a data transmission device, having a plurality of microprocessor arrangements (MP1,..., Mpn), to which in each case one separate control command memory (EPROM, RAM) is allocated for storage of an operating control command sequence, characterized in that the individual microprocessor arrangements are connected to one another via a bus (B), in that the control command memory of one of the microprocessor arrangements is designed as a common read only memory (EPROM) for storing the operating control command sequences of all the microprocessor arrangements as well as a transmission control command sequence, in that the control command memories of the other microprocessor arrangements (MP2,..., MPn) are each formed from a low-capacity read only memory (ROM) for storing a load control command sequence and from a random access memory (RAM) for storing the operating control command sequence intended for the respective microprocessor arrangement, and in that, once the transmission control command sequence has been run in the microprocessor arrangement (MP1) which is connected to the common read only memory (EPROM), the load control command sequences of the other microprocessor arrangements (MP2,..., MPn) are activated successively by this microprocessor arrangement (MP1) by emitting control signals via the bus and, in the process and on such activation, the operating control command sequence stored for the respective microprocessor arrangement in the common read only memory is loaded in the random access memory (RAM) in question.

2. Electronic device according to Claim 1, characterized in that, whenever an operating control command is received in one of the random access memories (RAM) while the respective load control command sequence is running a copy of the operating control command just received is transmitted via the bus toward the microprocessor arrangement which is connected to the common read only memory and is compared in this microprocessor arrangement with the operating control command that has previously just been emitted.

## Revendications

1. Dispositif électronique, notamment dispositif de transmission de données, comportant une pluralité de montages (MP1, ... MPn) de microprocesseurs, à chacun desquels est associée une mémoire (EPROM, RAM) de séquence de commande distincte pour la mise en mémoire d'une séquence d'instruction de commande et de fonctionnement,
caractérisé
en ce que les montages de microprocesseurs individuels sont reliés entre eux par l'intermédiaire d'un bus (B),
en ce que la mémoire d'instruction de commande de l'un des montages de microprocesseurs est réalisée en mémoire (EPROM) morte commune pour la mise en mémoire des séquences d'instruction de commande et de fonctionnement de tous les montages de microprocesseurs ainsi que d'une séquence d'instruction de commande de transmission,
en ce que les mémoires d'instruction de commande des autres montages (MP2 ... MPn) de microprocesseurs sont formés chacun d'une mémoire morte de petite capacité (ROM) pour la mise en mémoire d'une séquence d'instruction de commande et de chargement ainsi que d'une mémoire (RAM) d'écriture-lecture pour la mise en mémoire de la séquence d'instruction de commande et de fonctionnement prévue pour le montage de microprocesseur associé,
et en ce que, par le déroulement de la séquence d'instruction de commande de transmission dans le montage (MP1) de microprocesseur reliée à la mémoire (EPROM) morte commune, les séquences d'instruction de commande et de chargement des autres montages (MP2 ... MPn) de microprocesseurs sont activées successivement par le montage (MP1) de microprocesseur en fournissant des signaux de commande par l'intermédiaire du bus et en ce que, à la suite d'une activation de ce genre, la séquence d'instruction de commande et de fonctionnement mémorisée pour le montage de microprocesseurs associés dans la mémoire morte commune est chargée dans la mémoire (RAM) d'écriture-lecture en question.

2. Dispositif électronique suivant la revendication 1,
caractérisé
en ce que, à chaque réception d'une instruction de commande de fonctionnement dans l'une des mémoires (RAM) d'écriture-lecture à la suite du déroulement de la séquence d'instruction de commande et de chargement associée, une copie de l'instruction de commande de fonctionnement qui vient d'être reçue est transmise par l'intermédiaire du bus au montage de microprocesseur relié à la mémoire morte commune et comparée dans cette mémoire à l'instruction de commande de fonctionnement qui a justement été fournie auparavant.
